Europäisches Patentamt

(19) European Patent Office

Office européen des brevets

(11) EP 0 610 737 B1

(12) **FASCICULE DE BREVET EUROPEEN**

(45) Date de publication et mention
de la délivrance du brevet:
**09.04.1997 Bulletin 1997/15**

(51) Int. Cl.$^6$: **B60C 23/04**

(21) Numéro de dépôt: **94101230.4**

(22) Date de dépôt: **28.01.1994**

(54) **Procédé d'exploitation des signaux dans un système de surveillance de pneumatiques**

Verfahren zur Auswertung von Signalen in einem System zur Überwachung von Fahrzeugreifen

Method for processing signals in a tyre monitoring system

(84) Etats contractants désignés:
**DE FR GB IT**

(30) Priorité: **11.02.1993 FR 9301806**

(43) Date de publication de la demande:
**17.08.1994 Bulletin 1994/33**

(73) Titulaire: **COMPAGNIE GENERALE DES ETABLISSEMENTS MICHELIN-MICHELIN & CIE F-63040 Clermont-Ferrand Cédex 01 (FR)**

(72) Inventeur: **Chamussy, Jean-François F-41000 Blois (FR)**

(74) Mandataire: **Bauvir, Jacques Michelin & Cie, Service SGD/LG/PI Ladoux 63040 Clermont-Ferrand Cedex 01 (FR)**

(56) Documents cités:
**EP-A- 0 284 895          FR-A- 2 680 135**

Printed by Rank Xerox (UK) Business Services
2.14.2/3.4

## Description

La présente invention se rapporte aux systèmes de surveillance des pneumatiques. Plus particulièrement, elle concerne l'exploitation des mesures faites sur les pneumatiques en vue d'apporter une aide aussi complète que possible au conducteur.

Le but premier des systèmes de surveillance des pneumatiques est d'alerter le conducteur de toute anomalie pouvant survenir aux pneumatiques, ou à l'un de ces pneumatiques. Pour cela, il est impossible de se contenter d'afficher les valeurs de pression, et de température le cas échéant, relevées dans les pneumatiques. La consultation permanente de ces indications risque d'être fastidieuse, et surtout leur interprétation par le conducteur reste très problématique parce que ces mesures sont influencées par les perturbations diverses comme l'échauffement du pneumatique en roulage. C'est pourquoi un processeur prend en charge l'exploitation globale des signaux, selon un programme de traitement approprié pour donner une alerte au conducteur lorsque l'un de ses pneumatiques, ou plusieurs d'entre eux, ne sont plus dans un état de fonctionnement normal, voire entrent dans une zone dangereuse pour la sécurité d'utilisation du véhicule.

Le but de la présente invention est de pouvoir non seulement assurer la fonction "alerte" en cas de défaillance, mais aussi de pouvoir apporter une assistance lorsque l'on regonfle les pneumatiques les uns après les autres au cours d'une opération d'entretien périodique, dans une station de gonflage ou bien au moyen d'un regonfleur portatif. Dans ce cas, bien souvent, l'opérateur ne dispose pas du tableau donnant les pressions de gonflage du véhicule concerné. Même s'il dispose d'un système de surveillance des pressions des pneumatiques, celui-ci ne renseigne pas nécessairement l'opérateur sur les valeurs des pressions nominales. On ne peut pas envisager d'imposer à l'opérateur de procéder par ajustements successifs en consultant entre chaque ajustement les indications fournies au tableau de bord par le système de surveillance des pneumatiques.

On a déjà imaginé d'utiliser le système de surveillance des pneumatiques pour procurer à l'opérateur une aide au regonflage. L'approche classique de ce problème est de demander au conducteur d'indiquer au système, par une commande appropriée au tableau de bord par exemple, que l'on va procéder au regonflage, ou bien d'ajouter un capteur, par exemple sur la valve, permettant de détecter l'utilisation d'un regonfleur, comme proposé dans la demande EP-A-0 284 895.

La demande EP-A-0 284 895 divulgue aussi un procédé d'exploitation des signaux dans un système de surveillance des pneumatiques d'un véhicule, ledit système délivrant une mesure de la pression P de gonflage de chaque pneumatique, le système de surveillance ayant un mode de fonctionnement normal consistant à donner au conducteur du véhicule une alerte lorsque la pression de l'un des pneumatiques n'est plus considérée comme normale, et un mode de fonctionnement en assistance au regonflage, ledit système basculant automatiquement dudit mode de fonctionnement normal audit mode de fonctionnement en assistance au regonflage lors de la détection d'une grande variation de la pression de gonflage de l'un des pneumatiques du véhicule.

Selon l'invention la détection d'une grande variation de la pression de gonflage de l'un des pneumatiques du véhicule est faite comme suit :

a) on calcule une valeur filtrée $P_F$ de P, représentative des états antérieurs du pneumatique existant avant l'instant t, telle que :

$$P_F(t) = K_1 \, P_F(t-1) + K_2 \, P(t) \text{ avec } K_1 + K_2 = 1,$$

b) on compare P à $P_F$,

c) on détecte que le pneumatique observé est en cours de regonflage si la valeur absolue de $P - P_F$ est plus grande qu'une valeur du seuil déterminée expérimentalement et on bascule automatiquement dans un mode de fonctionnement en assistance au regonflage du pneumatique considéré.

Partant de l'observation que, par la cause des fuites ou de la porosité des matériaux, un pneumatique en cours d'utilisation ne peut que perdre de l'air, il est proposé de construire un système de surveillance capable de basculer automatiquement d'un mode de fonctionnement normal à un mode d'assistance au regonflage lorsque le début d'un regonflage est détecté. Ce basculement est non seulement automatique, mais il est spontané puisqu'il n'utilise que sa propre connaissance de l'état des pneumatiques, sans avoir recours à une information supplémentaire spécifique de la situation de regonflage.

A cette fin, le système se base sur la mesure de la pression relevée à l'intérieur de chaque pneumatique. Or celle-ci peut s'élever par suite d'un échauffement du pneumatique, et pas seulement lorsque l'on regonfle celui-ci. Mais la constante de temps d'un échauffement, phénomène thermique, est très grande, bien plus grande celle d'un regonflage, même dans le cas où l'on utilise des regonfleurs manuels, à faible débit. Grâce à un filtre judicieux, on peut distinguer le regonflage de l'échauffement de façon très fiable.

Un système de surveillance ainsi élaboré permet non seulement d'apporter au conducteur une assistance lorsqu'il souhaite effectivement regonfler ses pneumatiques, mais il permet aussi de l'alerter lorsque, par exemple lors d'une permutation de pneumatiques sur un véhicule ayant des pressions de gonflage différentes à l'avant et à l'arrière, on oublie de réajuster les pressions. Dans ce cas, sur l'un des essieux au moins, le système va détecter une évolution non naturelle, à savoir un regonflage, et celui qui a effectué l'opération de permutation, ou le conducteur, pourra être averti par le passage automatique en mode d'assistance au regonflage. De même, lorsque l'on place la roue de secours après une crevaison, le système basculera automatiquement en mode d'assistance au regonflage, et en général donnera une alarme de surgonflage puisque la roue de secours doit toujours être gonflée à une pression supérieure à la plus élevée des pressions nominales des pneumatiques de chaque essieu.

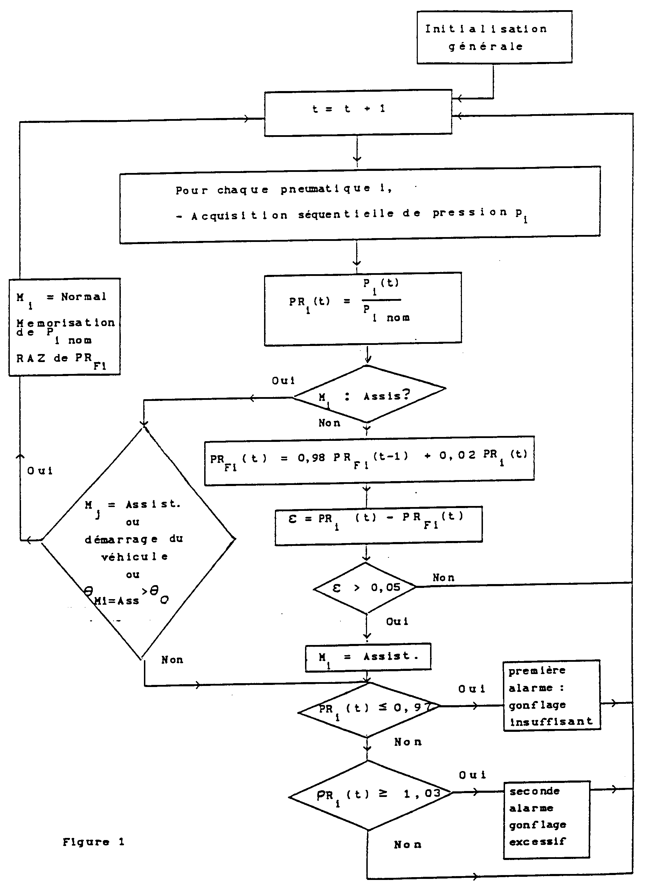

La description qui suit expose un mode de réalisation de l'invention particulièrement efficace de par le filtre choisi pour calculer $P_F$, et est illustrée par la figure 1 jointe, qui donne l'algorithme de traitement des signaux.

Connaissant pour chaque pneumatique i la pression nominale $P_{i\,nom}$ de gonflage, on peut construire un estimateur sans dimension :

$$PR_i(t) = \frac{P_i(t)}{P_{i\,nom}}$$

Il faut construire un filtre permettant de gommer toutes les fluctuations des valeurs $PR_i(t)$ basées sur les mesures $P_i(t)$. Ce filtre doit être représentatif de l'historique des états antérieurs de pression de gonflage d'un pneumatique. On va donc calculer, pour chaque pneumatique i, une valeur filtrée $P_F$ (ou $PR_F$ si l'on utilise des estimateurs sans dimension) qui incarne une représentation de tous les états de gonflage du pneumatique, de préférence depuis le dernier regonflage. Cette valeur filtrée est calculée comme suit :

$$PR_{Fi}(t) = K_1\,PR_{Fi}(t\text{-}1) + K_2\,PR_i(t)\ \text{avec}\ K_1 + K_2 = 1$$

Juste après un réajustement de pression, on initialise le système en adoptant comme première valeur filtrée

$$PR_{Fi}(t) = 1$$

Ensuite, cette valeur filtrée calculée pour tous les cycles suivants permet de donner une référence qui s'adapte à l'état réel de pression de gonflage, c'est à dire qui peut suivre des variations assez lentes dues à des phénomènes thermiques, mais ne suivra pas une variation rapide due à un regonflage. La détection du regonflage consiste à repérer que la dernière valeur de l'estimateur $PR_i(t)$ s'est écartée par excès de la valeur filtrée $PR_{Fi}(t)$. Par expérimentations, on choisit très facilement un seuil $\varepsilon$ suffisamment grand pour tenir compte des dérives dues à des causes thermiques, et qui reste suffisamment faible pour détecter le regonflage très peu de temps après qu'il ait débuté.

Les expérimentations menées ont montré que les valeurs $K_1 = 0,9$ et $K_2 = 0,1$ donnent d'excellents résultats. La sensibilité du filtre, c'est à dire sa vitesse de réaction à partir du moment où l'on a débuté effectivement un regonflage, dépend du débit d'air insuflé dans le pneumatique. Le filtre proposé est un excellent compromis permettant d'utiliser aussi bien des stations de regonflage à gros débit que des pompes manuelles. Il convient de diminuer le poids $K_1$ d'autant plus que le débit de la pompe de regonflage est élevé. A la figure 1, les valeurs indiquées pour $K_1$ et $K_2$ sont respectivement 0,98 et 0,02. Ces valeurs peuvent aussi atteindre 0,99 et 0,01. Même dans ce dernier cas, avec un temps de cycle d'observation de l'ordre de 0,7 secondes et une station de gonflage usuelle, le système ne met pas plus de 2 à 3 secondes pour basculer en mode d'assistance au regonflage.

En assistance au regonflage, on ne peut pas se contenter de réutiliser la même fourchette de surveillance de la pression d'air que celle utilisée par le même système lorsqu'il travaille en mode normal. Il faut regonfler en respectant une tolérance étroite (par exemple ± 3 %) encadrant finement la valeur nominale, laquelle tient éventuellement compte des conditions d'utilisation du véhicule (capteur de charge éventuel par exemple), alors que en mode normal effectuant la surveillance proprement dite, on va tolérer une plus grande perte d'air (par exemple - 15 % par rapport à la pression nominale).

L'assistance au regonflage proposée consiste à fournir une première alarme tant que la pression mesurée $P_i(t)$ est inférieure à un seuil minimal $P_{imin}$, et à fournir une seconde alarme distincte de la première lorsque la pression mesurée $P_i(t)$ est supérieure à un seuil maximal $P_{i\,max}$.

L'opérateur étant à l'extérieur du véhicule, la première alarme active par exemple un bruiteur de façon continue, et la seconde alarme active le même bruiteur de façon discontinue. L'opérateur sait qu'il doit regonfler tant que le bruiteur ne s'est pas éteint, et au plus jusqu'à ce que le bruiteur fonctionne de façon discontinue. Pour communiquer l'instruction nécessaire à l'utilisateur, on peut aussi utiliser l'ampoule électrique du clignotant le plus proche du pneumatique considéré.

Avec les stations de regonflage usuelles, le débit d'air au gonflage est supérieur à ce qu'il est lors d'un dégonflage. En conséquence, il est particulièrement aisé d'utiliser le mode d'assistance au regonflage en regonflant le pneumatique considéré jusqu'à ce que l'alarme haute se déclenche, puis en le défonflant lentement jusqu'à ce que ladite alarme haute s'arrête.

On peut ajouter d'autres tests de vraisemblance afin d'augmenter la fiabilité du passage automatique en mode assistance au regonflage. Par exemple, après avoir constaté que la valeur absolue de $PR_i(t)$ - $PR_{Fi}(t)$ est plus grande que $\varepsilon$, on peut vérifier que le même test donne bien une valeur qui reste inférieure à $\varepsilon$ pour tous les autres pneumatiques du véhicule, car on suppose que l'utilisateur ne peut regonfler qu'un seul de ses pneumatiques à la fois.

On vient d'expliquer comment le système est capable de basculer automatiquement en mode assistance au gonflage pour un pneumatique donné. Cela est symbolisé par la condition $M_i$ = Assis. sur l'organigramme de la figure 1 jointe. Il faut maintenant établir les conditions à remplir pour que le système quitte automatiquement ce mode assistance pour le pneumatique i. On propose de vérifier les trois conditions suivantes :

1) basculement en mode assistance pour un autre pneumatique j : $M_j$ = assist. ;
2) période de temps $\theta_{Mi}$ longue en mode assistance sans apport d'air sur le même pneumatique : $\theta_{Mi = Assistance}$ > $\theta_o$, $\theta_o$ étant un seuil de durée préétabli ;
3) démarrage du véhicule : par exemple sollicitation du démarreur ou mieux encore, information obtenue d'un capteur de vitesse.

Lorsque l'une au moins de ces conditions est remplie, le système bascule sur le mode normal pour le pneumatique i, ce qui est illustré par le basculement en mode $M_i$ = Normal sur la figure 1 jointe.

Après basculement du mode assistance au regonflage au mode de fonctionnement normal, la nouvelle valeur de référence pour le pneumatique i est mémorisée (Mémorisation de $P_{i\ nom}$) et le filtre $PR_{Fi}$ est réinitialisé en effaçant l'historique. Le filtre prend conventionnellement la valeur 1 (RAZ de $PR_{Fi}$).

Dans la mesure où le système de surveillance lui-même consomme de l'énergie électrique, il sera en général prévu qu'il soit automatiquement coupé lorsque le moteur ne fonctionne pas. Si l'on incorpore au système un mode assistance au regonflage comme proposé par la présente invention, il faut alors que le système puisse fonctionner lorsque la clé de contact du véhicule est sur une autre position que la position contact coupé. De préférence, il faut stocker les données relatives à l'historique des pneumatiques en mémoire non volatile.

## Revendications

1. Procédé d'exploitation des signaux dans un système de surveillance des pneumatiques d'un véhicule, ledit système délivrant une mesure de la pression P de gonflage de chaque pneumatique, le système de surveillance ayant un mode de fonctionnement normal consistant à donner au conducteur du véhicule une alerte lorsque la pression de l'un des pneumatiques n'est plus considérée comme normale, et un mode de fonctionnement en assistance au regonflage, ledit système basculant automatiquement dudit mode de fonctionnement normal audit mode de fonctionnement en assistance au regonflage lors de la détection d'une grande variation de la pression de gonflage de l'un des pneumatiques du véhicule, caractérisé en ce que à tout instant t,

   a) on calcule une valeur filtrée $P_F$ de P, représentative des états antérieurs du pneumatique existant avant l'instant t, telle que :

   $$P_F(t) = K_1 P_F(t-1) + K_2 P(t) \text{ avec } K_1 + K_2 = 1,$$

   b) on compare P à $P_F$
   c) on détecte que le pneumatique observé est en cours de regonflage si la valeur absolue de P - $P_F$ est plus grande qu'une valeur de seuil déterminée expérimentalement et on bascule automatiquement dans un mode de fonctionnement en assistance au regonflage du pneumatique considéré.

2. Procédé selon la revendication 1, caractérisé en ce que la mesure P de la pression de gonflage est exprimée en pourcentage par rapport à la pression nominale pour le pneumatique considéré.

3. Procédé selon l'une des revendications 1 et 2, caractérisé en ce que l'assistance au regonflage consiste à fournir une première alarme tant que la pression mesurée $P_i(t)$ est inférieure à un seuil minimal $P_{i\ min}$, et à fournir une seconde alarme distincte de la première lorsque la pression mesurée $P_i(t)$ est supérieure à un seuil maximal $P_{i\ max}$.

4. Procédé selon l'une des revendications 1 à 3, caractérisé en ce que, après avoir constaté que la valeur absolue de P - $P_F$ est plus grande que le seuil choisi pour un pneumatique considéré, on ne bascule en mode assistance au regonflage que si la valeur absolue de P - $P_F$ reste inférieure au seuil choisi pour l'ensemble des autres pneumatiques du même véhicule.

5. Procédé selon l'une des revendications 1 à 4, caractérisé en ce que l'on quitte le mode d'assistance au regonflage d'un pneumatique lorsque le regonflage d'un autre pneumatique est détecté, ou lorsque le temps de fonctionnement en mode d'assistance au regonflage pour un pneumatique déterminé a dépassé une période préétablie, ou lorsque d'autres conditions prédéterminées sont remplies.

## Claims

1. A method of using the signals in a monitoring system for the tyres of a vehicle, said system supplying a measurement of the inflation pressure P for each tyre, the monitoring system having a normal operating mode consisting in alerting the driver of the vehicle when the pressure of one of the tyres is no longer considered normal, and a reinflation assistance operating mode, said system automatically switching from said normal operating mode to said reinflation assistance operating mode when a great variation in the inflation pressure of one of the tyres of the vehicle is detected, characterised in that at any time t,

a) a filtered value $P_F$ is calculated from P, representative of the prior conditions of the tyre existing before the instant t, such that:

$$P_F(t) = K_1 P_F(t-1) + K_2 P(t) \text{ with } K_1 + K_2 = 1$$

b) P is compared to $P_F$
c) it is detected that the tyre observed is in the process of reinflation if the absolute value of $P - P_F$ is greater than a threshold value determined experimentally and a switch is made automatically to a reinflation assistance operating mode for the tyre in question.

2. A method according to Claim 1, characterised in that the measurement P of the inflation pressure is expressed in percent relative to the nominal pressure for the tyre in question.

3. A method according to one of Claims 1 and 2, characterised in that the reinflation assistance consists in providing a first alarm while the measured pressure $P_i(t)$ is lower than a minimum threshold $P_{i\,min}$, and providing a second alarm distinct from the first when the measured pressure $P_i(t)$ is higher than a maximum threshold $P_{i\,max}$.

4. A method according to one of Claims 1 to 3, characterised in that, after having determined that the absolute value of $P - P_F$ is greater than the threshold selected for the tyre in question, a switch into reinflation assistance mode is only effected if the absolute value of $P - P_F$ remains less than the threshold selected for all the other tyres of the same vehicle.

5. A method according to one of Claims 1 to 4, characterised in that the reinflation assistance mode for a tyre is exited when the reinflation of another tyre is detected, or when the operating time in reinflation assistance mode for a given tyre has exceeded a preestablished period, or when other predetermined conditions are met.

## Patentansprüche

1. Verfahren zur Auswertung von Signalen in einem System zur Überwachung der Reifen eines Fahrzeugs, wobei das genannte System eine Messung des Aufpumpdruckes P eines jeden Reifens liefert, und das Überwachungssystem eine normale Funktions-Betriebsweise aufweist, die darin besteht, dem Fahrer des Fahrzeugs einen Alarm zu liefern, wenn der Druck eines der Reifen nicht als normal angesehen wird, und eine Aufpump-Unterstützungs-Funktions-Betriebsweise, wobei das genannte System automatisch zwischen der genannten normalen Funktions-Betriebsweise und der genannten Aufpump-Unterstützungs-Funktions-Betriebsweise umschaltet, wenn eine große Änderung des Aufpumpdrucks eines der Reifen des Fahrzeugs erfaßt wird, dadurch **gekennzeichnet,** daß man zu jedem Zeitpunkt t

a) einen aus P gefilterten Wert $P_f$ berechnet, der repräsentativ ist für die früheren Zustände des Reifens, die vor dem Zeitpunkt t vorliegen, wie:

$$P_F(t) = K_1 P_F(t-1) + K_2 P(t) \text{ mit } K_1 + K_2 = 1$$

b) P mit $P_F$ vergleicht, und

c) erfaßt, daß sich der beobachtete Reifen im Verlauf des Wiederaufpumpens befindet, wenn der Absolutwert von P - $P_F$ größer ist als ein experimentell bestimmter Schwellenwert, und man automatisch in eine Aufpump-Unterstützungs-Funktionsweise des betrachteten Reifens umschaltet.

2. Verfahren nach Anspruch 1, dadurch **gekennzeichnet,** daß der Meßwert P des Aufpumpdruckes als Prozentsatz ausgedrückt wird, bezogen auf den Nenndruck für den betrachteten Reifen.

3. Verfahren nach einem der Ansprüche 1 und 2, dadurch **gekennzeichnet,** daß die Aufpumpunterstützung darin besteht, einen ersten Alarm abzugeben, sowie der gemessene Druck $P_i$ (t) niedriger ist als ein erster Schwellenwert $P_{i\,min}$, und einen zweiten, vom ersten unterschiedlichen Alarm abzugeben, wenn der gemessene Druck $P_i$ (t) größer ist als ein maximaler Schwellenwert $P_{i\,max}$.

4. Verfahren nach einem der Ansprüche 1 bis 3, dadurch **gekennzeichnet,** daß man nach der Feststellung, daß der Absolutwert von P - $P_F$ für einen betrachteten Reifen größer ist als der gewählte Schwellenwert, nur auf die AufpumpUnterstützungs-Betriebsweise umschaltet, wenn der Absolutwert von P - $P_F$ für die Gesamtheit der anderen Reifen desselben Fahrzeugs niedriger bleibt als der gewählte Schwellenwert.

5. Verfahren nach einem der Ansprüche 1 bis 4, dadurch **gekennzeichnet,** daß man die Aufpump-Unterstützungs-Betriebsweise eines Reifens verläßt, wenn das Aufpumpen eines anderen Reifens erfaßt wird oder wenn die Betriebszeit in der Aufpump-Unterstützungs-Betriebsweise für einen bestimmten Reifen einen vorher festgesetzten Zeitraum überschritten hat oder wenn andere, vorbestimmte Bedingungen erfüllt sind.

Figure 1